# EUROPEAN PATENT SPECIFICATION

(11) **EP 0 414 507 B1**
(45) Date of publication and mention of the grant of the patent: **29.06.1994**
(21) Application number: 90309174.2
(22) Date of filing: 21.08.1990
(51) Int. Cl.: H02K 19/10, H02K 9/22, H02K 3/52

(54) **Improvements in electric reluctance machines**
Elektrische Reluktanzmaschinen
Perfectionnement aux machines électriques à réluctance

(30) Priority: 21.08.1989 GB 8919024
(43) Date of publication of application: 27.02.1991
(73) Proprietor: SWITCHED RELUCTANCE DRIVES LTD, Hyde Terrace Leeds LS2 9LN (GB)
(72) Inventor: Stephenson, John Michael, Leeds LS16 7LT (GB)
(74) Representative: Hale, Peter

(56) References cited:
- EP-A- 0 182 702
- EP-A- 0 289 292
- FR-A- 2 173 280
- GB-A- 1 204 502

## Description

The invention relates to an electric reluctance machine comprising a primary, having a primary core defining primary salient poles; a secondary, having secondary poles, which secondary is rotatable relative to the primary; and a plurality of coils each embracing at least one primary pole to energise it, side portions of the coils extending in spaces between the primary poles generally in the direction of the axis of rotation of the secondary relative to the primary; wherein the material of the core defines projections which also extend radially towards the secondary with respect to the axis of rotation and between adjacent sides of coils, commonly disposed in each space between adjacent primary poles.

EP-A1-0182702 discloses a brushless DC motor. The rotor has a number of pole segments and the stator has main field poles, embraced by field coils, and auxiliary poles in between the field coils. The main poles and the auxiliary poles extend radially inwardly to define the same air gap with the rotor.

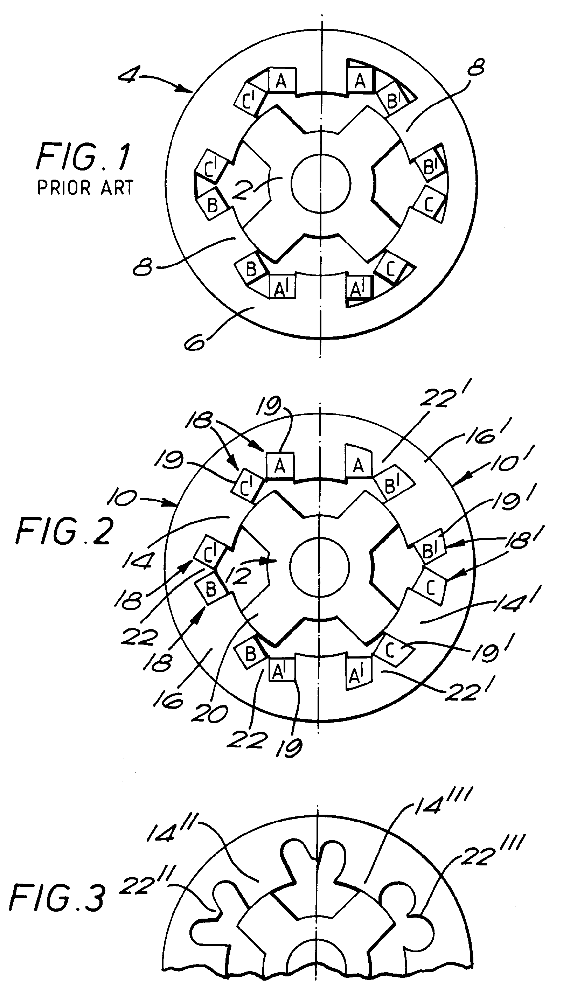

Figure 1 of the accompanying drawings illustrates half cross-sections of two forms of known stator for a three-phase, six pole stator/four pole rotor electric motor. The stator core is made up of a plurality of lateral laminations. The coils shown form the three phase windings A, A′, B, B′, C and C′. The coils AA′; BB′; and CC′ are interconnected in pairs to form the phase windings. Each form of motor has a rotor 2 and a stator core 4, having a "back-of-core" portion 6 and stator poles 8.

The core of the version on the left-hand side, has generally rectangular cross-section coil lengths (as viewed into the paper) and is formed with complementarily shaped corners to each space between stator poles in which the coil lengths are located. This coil section and complementary corner shape is recognised as being superior to that on the right of the drawing in which the rectangular section coil lengths sit in the spaces which are shaped such that they make contact with the coil on only one side and support the other side by an edge contact. The left hand side arrangement is considered to be superior because there is better thermal contact between the coil and the stator core. In addition, a magnetic circuit of lower reluctance is formed because of the greater effective depth of the back-of-core section of the circuit. The back-of-core section can be considered as the material of the laminations linking the poles.

However, the lamination design on the right-hand side of Figure 1, using an essentially arcuate bottom surface between stator poles, may be better suited to coils not having a generally rectangular cross-section. This is because there is greater space available for the winding itself.

As the rotor rotates the inductance of a phase winding varies cyclically between maximum and minimum values.

It has long been considered the case by those skilled in the art that to improve the output of a reluctance motor it is beneficial to reduce the minimum inductance of the phase winding relative to the maximum inductance and to minimise the reluctance of the magnetic circuit in the maximum inductance position. In this regard, designers optimise these parameters whilst allowing both sufficient space between stator poles for the coils and providing enough lamination steel to carry the magnetic flux.

Thus, known machines designed in accordance with these considerations have evolved broadly along the lines of those illustrated in Figure 1. It has previously been considered fundamental that the spaces between the stator poles, defined by the laminations, should contain no magnetic material. It has always been considered that the presence of magnetic lamination material in the space would increase the flux linking the excited stator coil in the minimum inductance position and hence increase the minimum inductance. Magnetic material in the space would have been avoided by the skilled person in the art as a bad feature contrary to good reluctance motor design practice. In particular, the dead space between adjacent coil lengths sharing a common space between adjacent poles would not have been filled with magnetic material. Such vacant space commonly arises when pre-wound coils are inserted over adjacent poles.

It is an object of the present invention to provide an electric reluctance machine construction which overcomes the limitations inherent in current reluctance machine design practice.

The present invention is characterised in that the material of the core defining each projection is in contact with the outer surface of a corresponding one of the said adjacent sides of the coils disposed in the spaces between the poles.

Commonly, each coil is an elongate loop embracing a pole with two parallel straight sides which are disposed in the spaces between the primary poles.

Preferably, the cross-section of the coil sides, viewed along the direction of the axis of rotation, may be rectangular or of a more circular or oval shape depending on the coil wire size, shape and method of construction. The radially extending material of the core between the adjacent coil sides is generally tapered. However, it is preferable that the channel defined between the radially extending portion and an adjacent pole conforms to the section of the coil lying therein. The coil sides are in contact with the material of the core defining the channel.

In one form, the base of each channel formed between a radially extending portion and an adjacent pole is flat. Alternatively, in some circumstances it may be preferable that the base of the channel is arcuate in section or otherwise curved.

The projection formed by each radially extending portion of the core may project between adjacent coil sides and up to or radially beyond the corner of an adjacent coil.

Preferably, the coil sides are in contact with substantially all the material defining the channel. Alternatively, the coil may be in contact with only the sides. Indeed, the coil may only be in contact with the one side of the channel.

Preferably, the core is made up of lateral laminations of a ferromagnetic material, such as steel.

The present invention can be put into practice in several ways, some of which will now be described by way of example with reference to the accompanying drawings in which:
Figure 2 is a composite cross-section illustrating two alternative embodiments of the present invention; and
Figure 3 is a cross-section of part of a motor illustrating further alternative embodiments of the present invention.

Both Figures 2 and 3 each illustrate two portions of a complete motor. Each is sub-divided by a broken line between the different portions. It will be understood that the complete motor in each case is a complete core and rotor. However, it is possible for different designs of core shape to be built into the same core.

The left-hand half of Figure 2 illustrates a switched reluctance motor comprising a stator core 10 within which is mounted a rotor 12. The core 10 of the stator is made up of a stack of lateral magnetisable steel laminations which define stator poles 14, extending parallel to the axis of the rotor 12 and projecting radially inwardly from a back-of-core 16. An insulated conducting coil 18 is wound around each of the stator poles 14, as denoted by the letters A, A′, B, B′, C, C′ - each pair of like letters denoting one coil. Each coil 18 is an elongate loop, having straight coil sides 19 disposed in the spaces between the stator poles.

The rotor 12, which is the same in both left- and right-hand embodiments, comprises a ferromagnetic laminated steel member defining four angularly equidistant rotor poles 20. The coils are used to energise the poles 14 which, in part, define the flux path to the rotor poles.

In many respects the constructions of the motor in the left- and right-hands are similar to those of Figure 1.

In the left-hand illustration, adjacent rectangular section coil sides 19 lie in the same space between adjacent poles. The edge of each space, defined between the back-of-core 16 and the side of each pair of adjacent stator pole sides, is shaped to complement the coil section. However, the vacant space between adjacent coils 18 in the same space is filled with the material of the laminations. The material extends between adjacent coil sides, forming a projection 22 which is tapered towards the axis of rotation of the rotor 12. The triangular or wedge-sectioned projection 22 thus formed defines a channel within which the length of an associated coil is snugly located, the material of the laminations defining the channel being in contact with the stator coil on three sides. The projection 18 is not energised by the coils and does not form part of the flux path between the stator and rotor.

Similarly, the illustration of the right-hand of Figure 2 shows spaces between stator poles defining the projections 22′ extending radially inwardly towards the axis of the rotor. However, in this embodiment the material of the back-of-core 16′ is shaped to the form of the coil side 19′, which is not now rectangular in section so that there is contact between the coil side and the back-of-core as well as with the side of the pole 14′ and the side of the projection 22′.

The introduction of the radially inwardly directed projection is contrary to the accepted teaching for reluctance motors. The stator lamination is shaped so as to introduce magnetic material into the channel space defined between adjacent stator coils. Clearly, this projection will increase the minimum inductance of the phase windings. However, surprisingly it has been found that the introduction of these projections has advantages which outweigh the effect of the increased minimum inductance.

The thermal resistance between the coil and the lamination is reduced using the projections because of the significant increase in the area of physical contact between the core material and the coil sides. Thus, the overall cooling of the coils is improved due to the greater heat exchange by the contacting surface areas. Consequently, the current in the coils can be increased. As a result of this the output which can be obtained from a given motor can be increased.

As an alternative, the motor could be redesigned to use a smaller coil cross sectional area for a given power output because of the more efficient cooling permitting a greater allowable coil current density. Thus, less winding space is required in the lamination cross-section making up the channels and a greater depth of the back-of-core can be tolerated in the same overall diameter. The thickness of the back-of-core has in the past been limited by cooling requirements.

Thus, according to the invention the stiffness of the laminations can be increased because of the increased depth of the back-of-core made possible by the improved cooling. Furthermore, as a result of the presence of the projections, each stator lamination is rendered more mechanically rigid due to the increased radial thickness of the back-of-core in the regions of the projections. The overall increased stiffness serves to reduce the level of acoustic noise emitted by the motor.

The two channels defined on either side of each projection may, indeed, suit certain coil insertion techniques as each gap provides a ready shaped space in which the coil is readily locatable.

A further advantage is that the magnetic reluctance of the back-of-core portion of the magnetic circuit is reduced by the additional steel of the projections. This reluctance is also reduced by the increased thickness of the back-of-core consequent upon the enhanced cooling efficiency of the coil/core contact. Thus, adding projections in accordance with the invention and/or using the increased cooling effect to increase the back-of-core depth are beneficial in reducing the reluctance of the magnetic circuit which is ultimately beneficial for machine performance.

Figure 3 shows two alternative embodiments. Referring to the left-hand embodiment, the stator poles 14˝ again define spaces between them. An inwardly directed projection 22˝ protrudes radially inwardly into the space. However, the base of the channel defined between each projection and an adjacent pole side are arcuate, or otherwise curved, in section. It will be understood that the projections defined by the laminations may be widely varying shapes in different designs. In the left-hand of Figure 3 the projection is a truncated wedge section. It may extend radially inwardly by a varying amount even within the same motor, subject only to the maximum extent being limited by the free movement of the rotor itself. The shape of the projection is optimised for the best overall cooling, core stiffness, winding cross-sectional area and magnetic reluctance, amongst other things. The sides and bottom of each channel formed by the adjacent surfaces of a pole, the back-of-core and the projections may be curved or straight. Thus, it will also be seen that the projection 22‴, in the right-hand illustration of Figure 3 is less truncated and the side of each pole 14‴ defines a curved side to the channel up to the radially inner edge of the pole. Also in this embodiment the waisted pole is wider at the air gap than in the pole body at its minimum width.

It will be understood by those skilled in the art that, while this description refers to electric motors, the invention is equally applicable to electric generators. The invention is also equally applicable to machines with any number of phases and any number of stator poles.

It will also be understood by those skilled in the art that small machines generally require proportionally more winding space than larger machines and that small machines usually use circular section wire, whereas larger machines frequently use a rectangular section conductor. Consequently, different shapes of channel are appropriate to different sizes of machine as well as different specifications. However, all usually have the common feature of benefiting from the tapered substantially triangular projections.

## Claims

1. An electric reluctance machine comprising a primary (10, 10′), having a primary core defining primary salient poles (14, 14′, 14˝, 14‴); a secondary (12), having secondary poles, which secondary is rotatable relative to the primary; and a plurality of coils (A, A′, B, B′, C, C′) each embracing at least one primary pole to energise it, side portions of the coils extending generally in the direction of the axis of rotation of the secondary relative to the primary; wherein the material of the core defines projections (22, 22′, 22˝, 22‴) which also extend radially towards the secondary with respect to the axis of rotation and between adjacent sides of coils commonly disposed in each space between adjacent primary poles, characterised in that the material of the core defining each projection is in contact with the outer surface of a corresponding one of the said adjacent sides of the coils disposed in the spaces between the poles.

2. A machine as claimed in Claim 1 in which each projection is tapered in lateral cross-section with respect to the axis of rotation.

3. A machine as claimed in Claim 2 in which the tapered projection is formed with a truncated end radially towards the secondary.

4. A machine as claimed in claim 1, 2 or 3 in which the base of a channel defined between at least one of the poles and an adjacent projection is laterally flat in section.

5. A machine as claimed in claim 1, 2 or 3 in which the base of a channel defined between at least one of the poles and an adjacent projection is laterally curved in section.

6. A machine as claimed in any of claims 4 or 5 in which both side walls of at least one of the channels is in contact with the coil.

7. A machine as claimed in claim 4 or 5 in which substantially all of the surface of the core defining at least one of the channels is in contact with the coil.

8. A machine as claimed in any preceding claim in which the core comprises a plurality of metal laminations.

9. A machine as claimed in any preceding claim in which the lateral cross-section of the coil is rectangular.

10. A machine as claimed in any of claims 1 to 8 in which the coils are circular in lateral cross-section.

## Patentansprüche

1. Elektrische Reluktanzmaschine, umfassend eine Primärseite (10, 10′) mit einem Primärkern, welcher Primär-Schenkelpole (14, 14′, 14˝, 14‴) definiert; eine Sekundärseite (12) mit Sekundärpolen, wobei die Sekundärseite relativ zur Primärseite drehbar ist; und eine Anzahl von Spulen (A, A′, B, B′, C, C′), die jeweils mindestens einen Primärpol zu dessen Erregung umgeben, wobei Seitenteile der Spulen sich im wesentlichen in Richtung der Drehachse der Sekundärseite relativ zur Primärseite erstrecken, wobei das Material des Kerns Vorsprünge (22, 22′, 22˝, 22‴) definiert, welche sich ebenso in Bezug auf die Drehachse radial zur Sekundärseite hin und zwischen benachbarten Seiten der Spule erstrecken, welche zusammen in jedem Raum zwischen benachbarten Primärpolen angeordnet sind, **dadurch gekennzeichnet, daß** das Material des Kerns, welches jeden Vorsprung definiert, in Kontakt mit der äußeren Fläche einer entsprechenden der benachbarten Seiten der Spulen ist, welche in den Raum zwischen den Polen angeordnet sind.

2. Maschine nach Anspruch 1, in welcher jede Vorsprung sich im Querschnitt mit Bezug auf die Drehachse verjüngt.

3. Maschine nach Anspruch 2, in welcher jeder verjüngte Vorsprung radial zur Sekundärseite hin mit einem abgeschnittenen Ende gebildet ist.

4. Maschine nach Anspruch 1, 2 oder 3, in welcher der Boden des Kanals, welcher zwischen mindestens einem der Pole und einer benachbarten Vorsprung definiert ist, im Schnitt in seitlicher Richtung flach ist.

5. Maschine nach einem der Ansprüche 1, 2 oder 3, in welcher der Boden eines Kanals, welcher zwischen mindestens einem der Pole und einer benachbarten Vorsprung definiert ist, im Schnitt in seitlicher Richtung gekrümmt ist.

6. Maschine nach einem der Ansprüche 4 oder 5, in welcher beide Seitenwände von mindestens einem der Kanäle in Kontakt mit der Spule steht.

7. Maschine nach Anspruch 4 oder 5, in welcher im wesentlichen die gesamte Fläche des Kerns, welche mindestens einen der Kanäle definiert, in Kontakt mit der Spule steht.

8. Maschine nach einem der vorangegangenen Ansprüche, in welcher der Kern eine Anzahl von Metallblechen umfaßt.

9. Maschine nach einem der vorangegangenen Ansprüche, in welcher der Querschnitt der Spule in seitlicher Richtung rechteckig ist.

10. Maschine nach einem der Ansprüche 1 bis 8, in welcher die Spulen im Querschnitt in seitlicher Richtung kreisförmig sind.

## Revendications

1. Machine électrique à réluctance, comprenant un primaire (10, 10′), pourvu d'un induit primaire définissant des pôles saillants primaires (14, 14′, 14˝, 14‴) un secondaire (12), comportant des pôles secondaires, ledit secondaire pouvant tourner par rapport au primaire ; et plusieurs enroulements (A, A′, B, B′, C, C′ ) entourant chacun au moins un pôle primaire pour assurer son excitation, des parties latérales des enroulements s'étendant généralement dans la direction de l'axe de rotation du secondaire par rapport au primaire ; la matière de l'induit définissant des saillies (22, 22′, 22˝, 22‴) qui s'étendent également radialement en direction du secondaire par rapport à l'axe de rotation et entre des côtés adjacents d'enroulements disposés ensemble dans chaque intervalle entre des pôles primaires adjacents, machine caractérisée en ce que la matière de l'induit définissant chaque saillie est en contact avec la surface extérieure d'un côté correspondant parmi lesdits côtés adjacents des enroulements disposés dans les intervalles entre les pôles.

2. Machine telle que revendiquée dans la revendication 1, dans laquelle chaque saillie a un profil effilé en section latérale par rapport à son axe de rotation.

3. Machine telle que revendiquée dans la revendication 2, dans laquelle la saillie effilée est réalisée avec une extrémité tronquée radialement en direction du secondaire.

4. Machine telle que revendiquée dans la revendication 1, 2 ou 3, dans laquelle la base d'un canal défini entre au moins un des pôles et une saillie adjacente est latéralement plane en section.

5. Machine telle que revendiquée dans la revendication 1, 2 ou 3, dans laquelle la base d'un canal défini entre au moins un des pôles et une saillie adjacente est latéralement incurvée en section.

6. Machine telle que revendiquée dans une quelconque des revendications 4 ou 5, dans laquelle les deux parois latérales d'au moins un des canaux sont en contact avec l'enroulement.

7. Machine telle que revendiquée dans la revendication 4 ou 5, dans laquelle pratiquement toute la surface de l'induit définissant au moins un des canaux est en contact avec l'enroulement.

8. Machine telle que revendiquée dans une quelconque des revendications précédentes, dans laquelle l'induit comprend plusieurs tôles métalliques feuilletées.

9. Machine telle que revendiquée dans une quelconque des revendications précédentes, dans laquelle la section latérale de l'enroulement est rectangulaire.

10. Machine telle que revendiquée dans une quelconque des revendications 1 à 8, dans laquelle les enroulements ont une section latérale de forme circulaire.
